(19) Europäisches Patentamt
European Patent Office
Office européen des brevets

(11) Veröffentlichungsnummer : **0 406 474 B1**

(12) # EUROPÄISCHE PATENTSCHRIFT

(45) Veröffentlichungstag der Patentschrift :
17.03.93 Patentblatt 93/11

(51) Int. Cl.$^5$ : **C01B 33/34**

(21) Anmeldenummer : **89115906.3**

(22) Anmeldetag : **29.08.89**

(54) **Synthetisches kristallines Aluminiumsilikat und Verfahren zu seiner Herstellung.**

(30) Priorität : **06.07.89 DE 3922181**

(43) Veröffentlichungstag der Anmeldung :
**09.01.91 Patentblatt 91/02**

(45) Bekanntmachung des Hinweises auf die Patenterteilung :
**17.03.93 Patentblatt 93/11**

(84) Benannte Vertragsstaaten :
**AT BE CH DE ES FR GB GR IT LI LU NL SE**

(56) Entgegenhaltungen :
**EP-A- 0 087 720**
**EP-A- 0 138 680**
**EP-A- 0 170 751**
**EP-A- 0 306 238**
**US-A- 4 257 885**

(73) Patentinhaber : **VAW aluminium AG**
**Georg-von-Boeselager-Strasse 25**
**W-5300 Bonn 1 (DE)**

(72) Erfinder : **Tissler. Arno, Dr.**
**Pfinzstrasse 20**
**W-75 Karlsruhe (DE)**
Erfinder : **Thome, Roland, Dr.**
**Brüsseler Strasse 58**
**W-5300 Bonn (DE)**
Erfinder : **Schmidt, Hubertus, Dr.**
**Hauptstrasse 75**
**W-5208 Eitdorf (DE)**
Erfinder : **Winkhaus, Günter, Prof. Dr.**
**Auf den Stappenberg 2b**
**W-5330 Königswinter (DE)**
Erfinder : **Unger, Klaus K.,Prof. Dr.**
**Joh.-Becher-Weg 24**
**W-6500 Mainz (DE)**

(74) Vertreter : **Müller-Wolff, Thomas, Dipl.-Ing.**
**VAW aluminium AG**
**Georg-von-Boeselager-Strasse 25 Postfach 2468**
**W-5300 Bonn 1 (DE)**

## Beschreibung

Die vorliegende Erfindung betrifft ein neues synthetisches kristallines Alumosilikat (Zeolith), ein Verfahren zu seiner Herstellung sowie seine Verwendung.

Zeolithe sind mikroporöse kristalline Alumosilikate, die sich durch eine Reihe von besonderen Eigenschaften auszeichnen. Sie besitzen ein definiertes Hohlraumsystem mit Öffnungswerten von 0,3 bis 0,9 nm. Sie sind Kationenaustauscher. In der H-Form weisen sie eine hohe Festkörperazidität auf. Der hydrophobe Charakter läßt sich durch das Verhältnis Silizium zu Aluminium steuern. Sie zeigen eine hohe thermische Stabilität.

Synthetische Zeolithe werden heute bzw. als Adsorbentien für Trennprozesse, als Ersatz für Phosphat in Waschmitteln und als Katalysatoren in petrochemischen Prozessen verwendet. Darüberhinaus weisen sie ein hohes Potential an Einsatzmöglichkeiten im Bereich umweltfreundlicher Technologien auf.

Als selektive heterogene Katalysatoren helfen sie wertvolle organische Produkte gezielter, energiesparend und mit weit weniger unerwünschten Nebenprodukten herzustellen. Natürliche Rohstoffe wie Erdöl und Erdgas oder Sekundärrohstoffe wie Bioalkohol, die bis heute nur unvollständig verwertet werden können, lassen sich mit Hilfe dieser Katalysatoren in weit höherem Maß zu nützlichen Produkten umsetzen. Zeolithe finden weiter Verwendung als Entstickungskatalysatoren für Abgase, als Energiespeicher und zur energiesparenden Stofftrennung.

Die Synthese siliziumreicher Zeolithe der Pentasil-Familie wurde erstmals 1967 von Argauer und Landolt (US-Patent 3.702.886) beschrieben.

Die Herstellung dieser Stoffe gelang aber nur unter Zusatz von organischen, strukturlenkenden Verbindungen zum Synthesegemisch. Meist wurden Tetraalkylammoniumverbindungen wie z.B. Tetrapropylammoniumbromid hierzu verwendet. In den folgenden Jahren gelang die Synthese mit einer Vielzahl weiterer organischer Substanzen, wie sekundären Aminen, Alkoholen, Ethern, Heterocyclen und Ketonen.

Alle diese Synthesevarianten haben aber eine Reihe von schwerwiegenden Nachteilen, die eine großtechnische, umweltschonende Herstellung ausschließen.

- Die eingesetzten organischen Stoffe sind toxisch und leicht entflammbar.

Da die Synthese unter hydrothermalen Bedingungen unter hohem Druck, meist in Autoklaven, durchgeführt werden muß, ist ein Entweichen dieser Stoffe nie ganz auszuschließen.

Hierdurch entsteht ein hohes Gefährdungspotential für die Bedienungsmannschaften und die nähere und weitere Umgebung der Produktionsstätte. Die bei der Herstellung anfallenden Abwässer enthalten ebenfalls diese Stoffe und müssen daher unter hohen Kosten entsorgt werden, um eine Umweltverseuchung auszuschließen. Hinzu kommt noch, daß die sich im Gitter befindlichen organischen Anteile bei hohen Temperaturen ausgebrannt werden müssen. Sie oder mögliche Abbau- bzw. Folgeprodukte gelangen damit in die Abluft. Dieses Ausbrennen kann zusätzlich Gitterschädigungen im Zeolith-Katalysator hervorrufen, die ihn in seinen katalytischen Eigenschaften beeinträchtigen.

Alle diese Nachteile haben dazu geführt, daß eine großtechnische Herstellung dieses nützlichen Katalysators bis heute nur in Ansätzen durchgeführt wird.

In den letzten Jahren wurden in der Patentliteratur einige Herstellungsverfahren beschrieben, bei denen auf den Einsatz dieser organischen Stoffe verzichtet werden konnte (z.B. US 4.257.885).

Die in diesen Patenten beschriebenen Herstellungsverfahren führen aber nur sehr langsam (mehrere Tage) und meist unvollständig zum gewünschten Produkt. Desweiteren ist das Auftauchen von unerwünschten Nebenphasen in der Regel nicht auszuschließen.

Die vorliegende Erfindung behandelt nun ein rein anorganisches Syntheseverfahren, das die Bildung von Nebenphasen nahezu ausschließt und das in kurzer Zeit durchgeführt werden kann.

Die mit diesem Verfahren hergestellten synthetischen Alumosilikate weisen darüber hinaus physikalisch-chemische Merkmale auf, die sie von ähnlichen, anders hergestellten Produkten, eindeutig unterscheidbar machen.

Die mit dem erfindungsgemäßen Verfahren hergestellten Zeolithe weisen eine chemische Zusammensetzung auf, die in molaren Verhältnissen folgendermaßen beschrieben werden kann.

$0\text{-}3M_2O : Al_2O_3 : 15\text{-}40SiO_2 : 0\text{-}40H_2O$,

wobei M ein Alkalikation bedeutet. Diese Zeolithe können mit Hilfe einer Mineralsäure, einer Ammoniumverbindung, anderen Protonenlieferanten oder mit anderen Kationen ausgetauscht werden.

In Verbindung mit der obenstehenden chemischen Zusammensetzung zeigen die mit dieser Erfindung hergestellten Zeolithe ein Röntgendiffraktogramm, das zumindest die in Tabelle 1 aufgelisteten Gitterabstände beinhaltet.

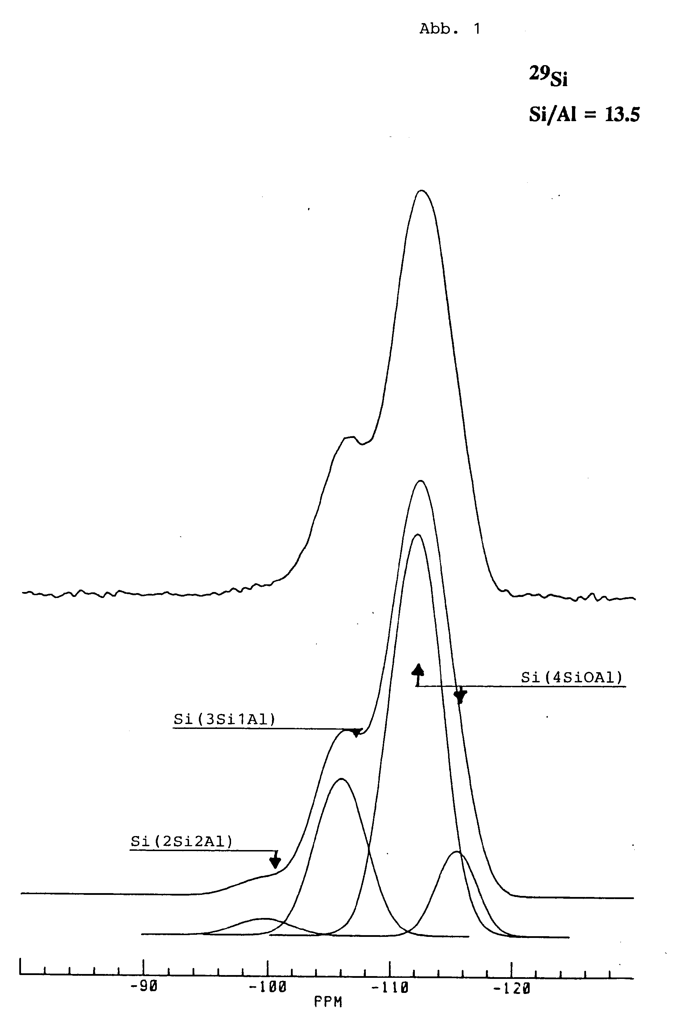

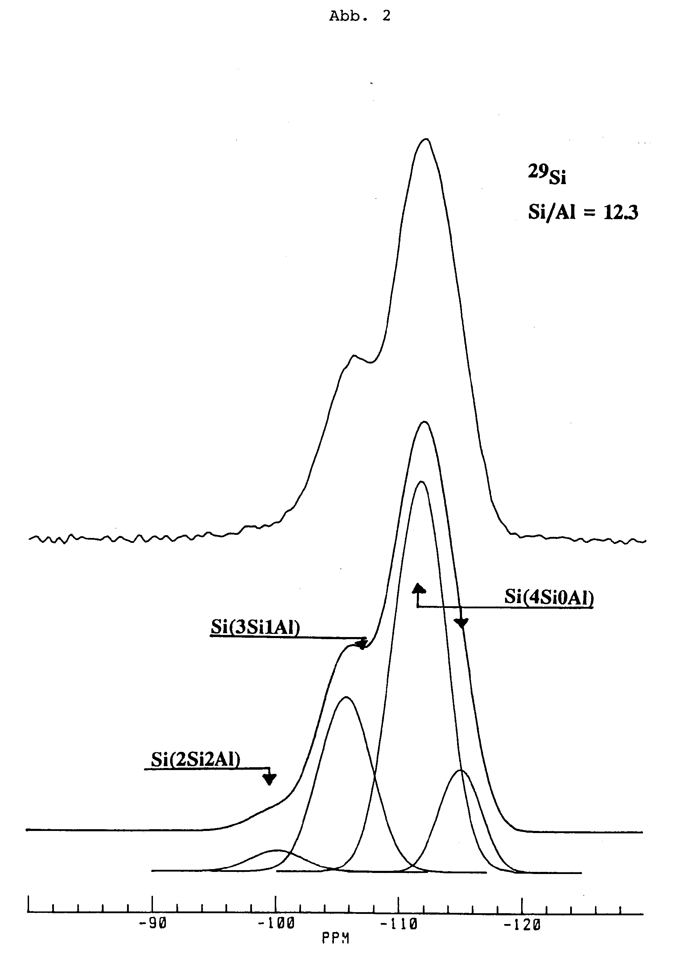

In Verbindung mit der obenstehenden chemischen Zusammensetzung und den in Tabelle I aufgelisteten Netzebenenabständen besitzen die mit dieser Erfindung hergestellten Zeolithe im 29-Silizium-Festkörper-MAS-Kernresonanzspektrum Adsorptionsbanden bei ca. -100, - 106, -112 und -116 ppm bezogen auf Tetra-Methyl-Silan als Standard, mit dessen Hilfe dieses neue Alumosilikat von allen ähnlichen Zeolithen unterschieden werden kann (Abb. 1 und 2).

Die Festkörper-MAS-Kernresonanzmessungen wurden an einem Bruker 400 MSL Spektrometer mit einem Magnetfeld von 9.4 T durchgeführt. Die 29-Si-MAS-NMR-Messungen wurden bei einer Frequenz von 79,5 MHz mit einer Pulslänge von 4 µs, einem Pulsintervall von 5 s, einer Drehzahl von 3 KHz und einer Scan-Zahl von 10.000 durchgeführt. Zur Peakentflechtung der gemessenen Spektren diente das Bruker GLINFIT-Programm. Um sicherzustellen, daß die Adsorbtionsbande bei ca. -100 ppm wirklich von Siliziumatomen, die über Sauerstoffatome mit 2 Siliziumatomen und zwei Aluminiumatomen verbunden sind, stammt, wurden zusätzliche Aufnahmen der Proben unter Zuhilfenahme der Kreuzpolarisationstechnik durchgeführt, die die Zugehörigkeit dieser Bande zu Silanol-Gruppen ausschloß und damit das Auftreten der beschriebenen Baueinheit bestätigten.

Die Festkörper-MAS-Kernresonanztechnik hat sich in den letzten Jahren zu einer der leistungsfähigsten Charakterisierungsmethoden u.a. für silikatische Materialien und besonders für Zeolithe entwickelt (Engelhardt, G.; Michel, D.; 1987 High-Resolution-Solid-State NMR of Silicates and Zeolites, Chichester: Wiley).

Seit 1979 wurden die 29-Si, 27-Al und die 17-O Festkörper-MAS-Kernresonanzspektroskopie für strukturelle Untersuchungen der Zeolithe angewendet.

Besonders die 29-Silizium-Festkörper-MAS-Kernresonanzspektroskopie hat viele neue Erkenntnisse über die Struktur und die Chemie der Zeolithe gebracht.

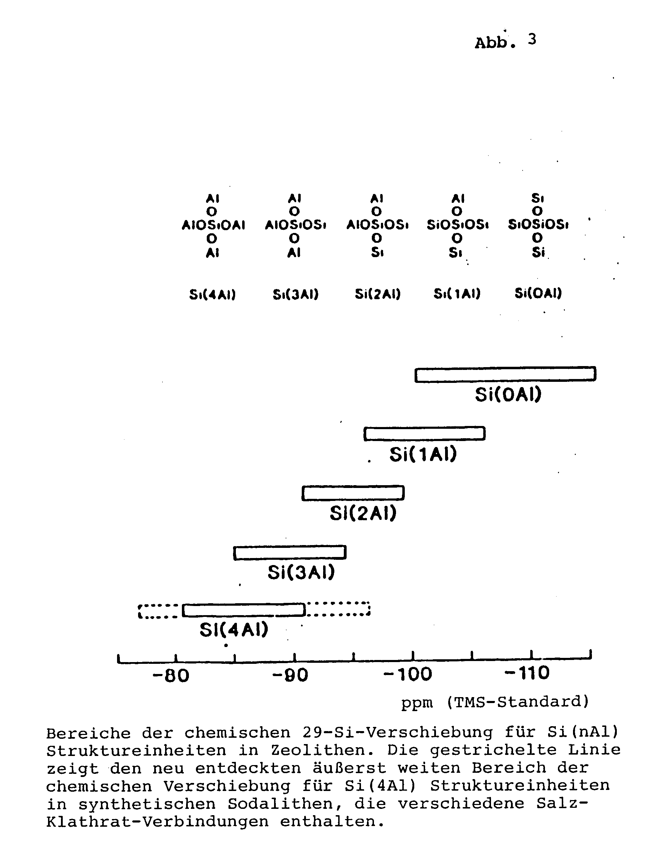

So konnten Signale von kristallographisch unterschiedlichen Gitter-Siliziumatomen aufgelöst und Strukturparametern zugeordnet werden (siehe Abb. 3; J. Klinowski; Ann.Rev.Mater.Sci. 1988, 18, 189-218).

Synthetische Zeolithe der Pentasil-Familie besitzen aufgrund ihres hohen $SiO_2$-Anteils im wesentlichen Siliziumgitteratome, die über Sauerstoffbrücken wiederum nur mit Siliziumatomen verbunden sind. Diese Struktureinheit kann durch ein Signal im 29-Silizium-Festkörper-MAS-Kernresonanzspektrum zwischen -112 und -116 ppm detektiert werden.

Weiter ist in Zeolithen der Pentasil-Familie oft noch ein weiteres schwächeres Signal bei ca. -106 ppm zu beobachten, dessen Intensität zu höheren Aluminiumgehalten ansteigt und das einem Siliziumatom, das über Sauerstoffbrücken mit 3 Siliziumatomen und 1 Aluminiumatom verbunden ist, zugeordnet werden kann.

Weitere Signale, die Siliziumatomen, die mit 2, 3 oder 4 Aluminiumatomen verbunden sind, zugeordnet werden können, wurden in Zeolithen mit Pentasil-Struktur nicht beobachtet, da herkömmliche Syntheseverfahren für Pentasile mit einem Molverhältnis $SiO_2/Al_2O_3$ von kleiner 40 bzw. 30 nur zu teilkristallinen Produkten führen. Durch das erfindungsgemäße Verfahren gelingt es besonders auch in diesem Bereich phasenreine Produkte mit hoher katalytischer Aktivität herzustellen. Davon ausgehend wird der Schluß gezogen, daß durch die erfindungsgemäße Herstellung des Zeolithes Struktureinheiten im Gitter entstehen, bei denen Siliziumatome über Sauerstoffatome mit 2 Siliziumatomen und 2 Aluminiumatomen verbunden sind (Adsorptionsbande bei ca. -100 ppm).

Die erfindungsgemäß hergestellten Zeolith-Katalysatoren besitzen aufgrund dieser Struktureinheiten eine weit höhere katalytische Aktivität als ähnliche, mit herkömmlichen Methoden hergestellte Pentasile.

Die erfindungsgemäße Herstellung dieser neuen Alumosilikate erfolgt durch hydrothermale Kristallisation aus einem rein anorganischen, wäßrig alkalischen Reaktionsgemisch mit folgender molarer Zusammensetzung:

$SiO_2/Al_2O_3$ = 15-40
$OH^-/SiO_2$ = 0,1-0,2
$H_2O/SiO_2$ = 20-60

besonders aber aus einem wäßrig alkalischen Reaktionsgemisch mit der molaren Zusammensetzung:

$SiO_2/Al_2O_3$ = 18-30
$OH^-/SiO_2$ = 0,13-0,18
$H_2O/SiO_2$ = 25-40

Die zur Herstellung verwendeten Materialien sind $SiO_2$ und $Al_2O_3$ bzw. deren hydratisierte Derivate oder Alkali-Silikate und -Aluminate und Mineralsäure, vorzugsweise jedoch die kostengünstigen Ausgangsstoffe Natrium-Wasserglas, Aluminium- bzw. Natrium-Salze und Schwefelsäure.

Nach Mischen der Ausgangsstoffe erfolgt die hydrothermale Kristallisation bei Temperaturen oberhalb 100°C über einen Zeitraum von 1-100 Stunden.

Das gebildete Alumosilikat wird filtriert und zu Katalysatoren bzw. Adsorbentien weiterverarbeitet.

Beispiele

1.

Ein Reaktionsansatz aus Lösungen von Na-Wasserglas, Aluminiumsulfat, Natriumsulfat und Schwefelsäure mit den Molverhältnissen

$SiO_2/Al_2O_3$ = 30
$OH^-/SiO_2$ = 0,14
$H_2O/SiO_2$ = 30

wird in einem gerührten Autoklaven auf eine Reaktionstemperatur von 185°C aufgeheizt und 24 Stunden hydrothermal behandelt. Das feste Produkt wird filtriert und bei 110°C getrocknet.

Die Trockensubstanz besteht aus phasenreinem Alumosilikat mit einem Röntgendiffraktogramm mit zumindest den in Tabelle 1 aufgelisteten d-Werten.

Die chemische Zusammensetzung des Produktes in molaren Verhältnissen ausgedrückt ist

$1{,}1 Na_2O : Al_2O_3 : 31 SiO_2 : 6 H_2O$

Die aus dem 29-Silizium-Festkörper-MAS-Kernresonanzspektren erhaltenen Anteile der einzelnen Adsorptionsbanden, die ein Maß für die verschiedenen Siliziumtetraederkoordinationen sind, liegen bei:

| Si(4Si0Al) %<br>-112 und -116 ppm | Si(3Si1Al)<br>-106 ppm | Si(2Si2Al)<br>-100 ppm |
|---|---|---|
| 75 | 23 | 2 |

Ein Teil des Produktes wird mit Ammoniumnitrat mehrfach Ionengetauscht, aktiviert, in einen Reaktor einer Normaldruckströmungsapparatur eingefüllt und auf seine katalytischen Eigenschaften untersucht.

Als Testreaktion wird die Disproportionierung von Ethylbenzol verwendet. Bei einer Temperatur von 250°C und einer Reaktorbelastung von 0,33 $h^{-1}$ liegt der Umsatz bei 30 %.

2.

Ein Reaktionsansatz aus Lösungen von Na-Wasserglas, Aluminiumsulfat, Natriumsulfat und Schwefelsäure mit den Molverhältnissen

$SiO_2/Al_2O_3$ = 27
$OH^-/SiO_2$ = 0,14
$H_2O/SiO_2$ = 30

wird in einem gerührten Autoklaven auf eine Reaktionstemperatur von 185°C aufgeheizt und 24 Stunden hydrothermal behandelt. Das feste Produkt wird filtriert und bei 110°C getrocknet.

Die Trockensubstanz besteht aus phasenreinem Alumosilikat mit einem Röntgendiffraktogramm mit zumindest den in Tabelle 1 aufgelisteten d-Werten.

Die chemische Zusammensetzung des Produktes in molaren Verhältnissen ausgedrückt ist

$1{,}2 Na_2O : Al_2O_3 : 27 SiO_2 : 7 H_2O$

Die aus dem 29-Silizium-Festkörper-MAS-Kernresonanzspektren erhaltenen Anteile der einzelnen Adsorptionsbanden, die ein Maß für die verschiedenen Siliziumtetraederkoordinationen sind, liegen bei:

| Si(4Si0Al) %<br>-112 und -116 ppm | Si(3Si1Al)<br>-106 ppm | Si(2Si2Al)<br>-100 ppm |
|---|---|---|
| 73 | 24 | 3 |

Ein Teil des Produktes wird mit Ammoniumnitrat mehrfach Ionengetauscht, aktiviert, in einen Reaktor einer Normaldruckströmungsapparatur eingefüllt und auf seine katalytischen Eigenschaften untersucht.

Als Testreaktion wird die Disproportionierung von Ethylbenzol verwendet. Bei einer Temperatur von 250°C und einer Reaktorbelastung von 0,33 h$^{-1}$ liegt der Umsatz bei 33 %.

3.

Ein Reaktionsansatz aus Lösungen von Na-Wasserglas, Aluminium-sulfat, Natriumsulfat und Schwefelsäure mit den Molverhältnissen

$SiO_2/Al_2O_3$ = 24
$OH^-/SiO_2$ = 0,14
$H_2O/SiO_2$ = 30

wird in einem gerührten Autoklaven auf eine Reaktionstemperatur von 185°C aufgeheizt und 24 Stunden hydrothermal behandelt. Das feste Produkt wird filtriert und bei 110°C getrocknet.

Die Trockensubstanz besteht aus phasenreinem Alumosilikat mit einem Röntgendiffraktogramm mit zumindest den in Tabelle 1 aufgelisteten d-Werten.

Die chemische Zusammensetzung des Produktes in molaren Verhältnissen ausgedrückt ist

$1,1 Na_2O : Al_2O_3 : 24 SiO_2 : 7 H_2O$

Die aus dem 29-Silizium-Festkörper-MAS-Kernresonanzspektren erhaltenen Anteile der einzelnen Adsorptionsbanden, die ein Maß für die verschiedenen Siliziumtetraederkoordinationen sind, liegen bei:

| Si(4Si0Al) %        | Si(3Si1Al)  | Si(2Si2Al)  |
|---------------------|-------------|-------------|
| -112 und -116 ppm   | -106 ppm    | -100 ppm    |
| 71                  | 26          | 3           |

Ein Teil des Produktes wird mit Ammoniumnitrat mehrfach Ionengetauscht, aktiviert, in einen Reaktor einer Normaldruckströmungsapparatur eingefüllt und auf seine katalytischen Eigenschaften untersucht.

Als Testreaktion wird die Disproportionierung von Ethylbenzol verwendet. Bei einer Temperatur von 250°C und einer Reaktorbelastung von 0,33 h$^{-1}$ liegt der Umsatz bei 40 %.

Tabelle 1

| d-Werte/Netzebenenabstände | Relative Intensität |
|---|---|
| 11,2 ± 0,3 | stark |
| 10,1 ± 0,3 | stark |
| 9,8 ± 0,2 | schwach |
| 3,85 ± 0,1 | sehr stark |
| 3,83 ± 0,1 | stark |
| 3,75 ± 0,1 | stark |
| 3,73 ± 0,1 | stark |
| 3,60 ± 0,1 | schwach |
| 3,06 ± 0,05 | schwach |
| 3,00 ± 0,05 | schwach |
| 2,01 ± 0,02 | schwach |
| 1,99 ± 0,02 | schwach |

**Patentansprüche**

1. Synthetisches kristallines Alumosilikat mit der chemischen Zusammensetzung
   $0-3M_2O : Al_2O_3 : 15-40SiO_2 : 0-40H_2O$,
   wobei M ein Metall-Kation bedeutet, das in seinem Röntgendiffraktogramm zumindest die, zu den in Tabelle 1 aufgelisteten d-Werten zugehörigen, Röntgenreflexe aufweist,

## Tabelle 1

| d-Werte/Netzebenenabstände | Relative Intensität |
|---|---|
| 11,2 ± 0,3 | stark |
| 10,1 ± 0,3 | stark |
| 9,8 ± 0,2 | schwach |
| 3,85 ± 0,1 | sehr stark |
| 3,83 ± 0,1 | stark |
| 3,75 ± 0,1 | stark |
| 3,73 ± 0,1 | stark |
| 3,60 ± 0,1 | schwach |
| 3,06 ± 0,05 | schwach |
| 3,00 ± 0,05 | schwach |
| 2,01 ± 0,02 | schwach |
| 1,99 ± 0,02 | schwach |

dadurch gekennzeichnet, daß das 29-Silizium-Festkörper-MAS-Kernresonanzspektrum dieses Stoffes einen Peak zwischen -96 und -102 ppm bezogen auf den Standard Tetra-Methyl-Silan aufweist.

2. Synthetisches kristallines Alumosilikat gemäß Anspruch 1, dadurch gekennzeichnet, daß das 29-Silizium-Festkörper-MAS-Kernresonanzspektrum dieses Stoffes Adsorptionsbanden bei ca. -100, -106, -112 und -116 ppm bezogen auf den Standard Tetra-Methyl-Silan aufweist.

3. Synthetisches kristallines Alumosilikat gemäß einem der vorhergehenden Ansprüche, dadurch gekennzeichnet, daß es aus einem rein anorganischen Synthesegemisch durch hydrothermale Reaktion erhalten wurde.

4. Synthetisches kristallines Alumosilikat gemäß einem der vorhergehenden Ansprüche, dadurch gekennzeichnet, daß M ein Natrium-Kation ist.

5. Verfahren zur Herstellung eines synthetischen Alumosilikats, das die in einem der vorhergehenden Ansprüche aufgeführten Merkmale aufweist, aus einem Reaktionsansatz, der in wäßrigalkalischem Medium $SiO_2$ und $Al_2O_3$ bzw. deren hydratisierte Derivate oder Alkali-Silikate und -Aluminate, Mineralisatoren und ggf. Impfkeime enthält, dadurch gekennzeichnet, daß im Reaktionsansatz folgende Molverhältnisse vorliegen:
$SiO_2/Al_2O_3$ = 15 - 40
$OH^-/SiO_2$ = 0,1-0,2
$H_2O/SiO_2$ = 20 - 60

6. Verfahren nach Anspruch 5, dadurch gekennzeichnet, daß die Molverhältnisse folgende Werte aufwei-

sen:
$SiO_2/Al_2O_3$ = 18 - 30
$OH^-/SiO_2$ = 0,13-0,15
$H_2O/SiO_2$ = 15 - 40

7. Verwendung des kristallinen Alumosilikats zur Herstellung von Katalysatoren und Adsorbentien.

**Claims**

1. Synthetic crystalline aluminosilicate with the chemical composition
$0-3M_2O : Al_2O_3 : 15-40SiO_2 : 0-40H_2O$,
in which M is a metal cation having in its X-ray diffraction pattern at least the X-ray reflections associated with the d values listed in Table 1,

Table 1

| d values/lattice plane spacings | relative intensity |
|---|---|
| 11.2 ± 0.3 | strong |
| 10.1 ± 0.3 | strong |
| 9.8 ± 0.2 | weak |
| 3.85 ± 0.1 | very strong |
| 3.83 ± 0.1 | strong |
| 3.75 ± 0.1 | strong |
| 3.73 ± 0.1 | strong |
| 3.60 ± 0.1 | weak |
| 3.06 ± 0.05 | weak |
| 3.00 ± 0.05 | weak |
| 2.01 ± 0.02 | weak |
| 1.99 ± 0.02 | weak |

characterised in that the 29-silicon solid-state MAS nuclear magnetic resonance spectrum of this substance has a peak between -96 and -102 ppm, related to the tetramethylsilane standard.

2. Synthetic crystalline aluminosilicate according to claim 1, characterised in that the 29-silicon solid-state MAS nuclear magnetic resonance spectrum of this substance has adsorption bands at approximately -100, -106, -112 and -116 ppm, related to the tetramethylsilane standard.

3. Synthetic crystalline aluminosilicate according to one of the preceding claims, characterised in that it is obtained from a purely inorganic synthesis mixture through a hydrothermal reaction.

4. Synthetic crystalline aluminosilicate according to one of the preceding claims, characterised in that M is a sodium cation.

5. Method for producing a synthetic aluminosilicate having the features specified in the preceding claims from a reaction preparation which comprises $SiO_2$ and $Al_2O_3$ or the hydrated derivatives thereof or alkali silicates and aluminates, mineralisers and possibly seed crystals in an aqueous alkaline medium, characterised in that the reaction preparation has the following molar ratios:

$SiO_2/Al_2O_3$ = 15-40
$OH^-/SiO_2$ = 0.1-0.2
$H_2O/SiO_2$ = 20-60

6. Method according to claim 5, characterised in that the molar ratios have the following values:

$SiO_2/Al_2O_3$ = 18-30
$OH^-/SiO_2$ = 0.13-0.15
$H_2O/SiO_2$ = 25-40

7. Use of the crystalline aluminosilicate for producing catalysts and adsorbents.

**Revendications**

1. Aluminosilicate cristallin synthétique ayant la composition chimique :

0 à $3M_2O$ : $Al_2O_3$ : 15 à 40 $SiO_2$ : 0 à 40 $H_2O$,

dans laquelle M représente un cation métallique, et ayant dans son diagramme de diffraction de rayons X au moins les angles de réflexion des rayons X correspondant aux valeurs de d énumérées dans le tableau 1,

Tableau 1

| valeurs de d/distances des plans réticulaires | intensité relative |
|---|---|
| 11,2 ± 0,3 | forte |
| 10,1 ± 0,3 | forte |
| 9,8 ± 0,2 | faible |
| 3,85 ± 0,1 | très forte |
| 3,83 ± 0,1 | forte |
| 3,75 ± 0,1 | forte |
| 3,73 ± 0,1 | forte |
| 3,60 ± 0,1 | faible |
| 3,06 ± 0,05 | faible |
| 3,00 ± 0,05 | faible |
| 2,01 ± 0,02 | faible |
| 1,99 ± 0,02 | faible |

caractérisé en ce que le spectre de résonance nucléaire MAS de corps solide de 29-silicium de cette substance présente un pic entre -96 et -102 ppm, par rapport au tétraméthylsilane étalon.

2. Aluminosilicate cristallin synthétique selon revendication 1, caractérisé en ce que le spectre de résonance nucléaire MAS de corps solide de 29-silicium de cette substance présente des bandes d'adsorption à environ -100, -106, -112 et -116 ppm par rapport au tétraméthylsilane étalon.

3. Aluminosilicate cristallin synthétique selon une des revendications qui précèdent, caractérisé en ce qu'il a été obtenu par réaction hydrothermique à partir d'un mélange de synthèse purement minéral.

4. Aluminosilicate cristallin synthétique selon une des revendications qui précèdent, caractérisé en ce que M est un cation sodium.

5. Procédé de préparation d'un aluminosilicate synthétique ayant les caractéristiques énumérées dans les revendications qui précèdent à partir d'un mélange de réaction contenant en milieu aqueux alcalin $SiO_2$ et $Al_2O_3$ ou leurs dérivés hydratés ou des silicates et aluminates alcalins, des agents minéralisants et le cas échéant des germes d'ensemencement, caractérisé en ce que le mélange de réaction présente les rapports molaires suivants :

| | |
|---|---|
| $SiO_2/Al_2O_3$ | = 15 à 40 |
| $OH^-/SiO_2$ | = 0,1 à 0,2 |
| $H_2O/SiO_2$ | = 20 à 60 |

6. Procédé selon la revendication 5, caractérisé en ce que les rapports molaires sont les suivants :

| | |
|---|---|
| $SiO_2/Al_2O_3$ | = 18 à 30 |
| $OH^-/SiO_2$ | = 0,13 à 0,15 |
| $H_2O/SiO_2$ | = 25 à 40 |

7. Utilisation de l'aluminosilicate cristallin pour la préparation de catalyseurs et d'agents adsorbants.

Abb. 1

$^{29}$Si

Si/Al = 13.5

Si(4SiOAl)

Si(3Si1Al)

Si(2Si2Al)

-90   -100   -110   -120

PPM

11

Abb. 2

$^{29}$Si

Si/Al = 12.3

Si(3Si1Al)

Si(4Si0Al)

Si(2Si2Al)

−90       −100      −110      −120

PPM

Abb. 3

Bereiche der chemischen 29-Si-Verschiebung für Si(nAl)
Struktureinheiten in Zeolithen. Die gestrichelte Linie
zeigt den neu entdeckten äußerst weiten Bereich der
chemischen Verschiebung für Si(4Al) Struktureinheiten
in synthetischen Sodalithen, die verschiedene Salz-
Klathrat-Verbindungen enthalten.